## Europäisches Patentamt
## European Patent Office
## Office européen des brevets

(19)

(11) Veröffentlichungsnummer : **0 350 629 B1**

(12) # EUROPÄISCHE PATENTSCHRIFT

(45) Veröffentlichungstag der Patentschrift :
04.03.92 Patentblatt 92/10

(51) Int. Cl.⁵ : **A62C 3/00**, A62C 4/00,
B01J 19/00

(21) Anmeldenummer : **89110640.3**

(22) Anmeldetag : **12.06.89**

(54) **Behälter für explosionsgefährdetes Gut.**

(30) Priorität : **12.07.88 DE 3823611**

(43) Veröffentlichungstag der Anmeldung :
**17.01.90 Patentblatt 90/03**

(45) Bekanntmachung des Hinweises auf die
Patenterteilung :
**04.03.92 Patentblatt 92/10**

(84) Benannte Vertragsstaaten :
**AT BE DE FR GB IT NL**

(56) Entgegenhaltungen :
DE-C- 848 178
US-A- 3 788 514
US-A- 4 589 566

(73) Patentinhaber : **ZEPPELIN METALLWERKE GMBH**
**Leutholdstrasse Postfach 25 40**
**W-7990 Friedrichshafen 1 (DE)**

(72) Erfinder : **Waggershauser, Konrad**
**Raderacherstrasse 119**
**W-7990 Friedrichshafen 5 (DE)**
Erfinder : **Betzmeir, Helmut**
**Jagdstrasse 7**
**W-8012 Ottobrunn (DE)**

(74) Vertreter : **Patentanwälte Grünecker,**
**Kinkeldey, Stockmair & Partner**
**Maximilianstrasse 58**
**W-8000 München 22 (DE)**

## Beschreibung

Die Erfindung bezieht sich auf Behälter für explosionsgefährdetes Gut, mit einem bei Explosion im Inneren des Behälters abhebenden Reißdach, das über erste, ein Abheben des Reißdaches erlaubende Fesselelemente vorbestimmter Länge mit dem übrigen Behälter verbunden ist.

Solche Behälter sind u.a. aus der US-A-3 788 514 bekannt.

Solche Behälter werden unter anderem zur Lagerung von Staub verwendet. Staubexplosionen können außerordentlich heftig sein und zu großen Zerstörungen führen. Bei Behältern, deren Länge um ein Mehrfaches größer ist als deren Durchmesser kann der Explosionsablauf noch heftiger sein, da er nicht nur von der Art des Staubes, sondern zusätzlich von Axialströmungen, Turbulenzänderungen und Kompressionseffekten bestimmt wird. Es ist daher vorgeschrieben, daß bei solchen Behältern bei einer Staubexplosion das gesamte Dach bzw. die gesamte Stirnfläche abreißen kann, um so eine Verpuffung der Explosion zu erlauben. Damit das Dach nicht durch die Gegend fliegt und zu einer weiteren Gefahrenquelle wird, ist das Dach mit dem übrigen Behälter über Ketten verbunden. Diese Ketten ermöglichen zwar ein Abheben des Daches, verhindern aber, daß das Dach nach der Explosion unkontrolliert durch die Gegend fliegt.

Ungünstig bei dieser Konstruktion ist jedoch, daß es bei besonders heftigen Explosionen vorkommen kann, daß die Ketten reißen und somit das Reißdach dennoch unkontrolliert durch die Gegend fliegt.

Es ist daher Aufgabe der vorliegenden Erfindung, einen Behälter der eingangs genannten Art so zu verbessern, daß eine sichere Fesselung des Reißdaches auch bei heftigen Explosionen erreicht wird.

Diese Aufgabe wird erfindungsgemäß dadurch gelöst, daß zusätzlich zumindest zweite Fesselelemente vorgesehen sind, deren Länge geringer ist als die der ersten Fesselelemente. Hierdurch wird in vorteilhafter Weise erreicht, daß zunächst die zweiten Fesselelemente durchreißen, wodurch bereits ein hoher Betrag an kinetischer Energie abgebaut wird. Sobald die zweiten Fesselelemente durchgerissen sind, hebt das Reißdach ein Stück weiter an und wird dann endgültig von den ersten Fesselelementen gehalten.

Es ist in diesem Zusammenhang günstig, wenn die zweiten Fesselelemente schwächer dimensioniert sind als die ersten Fesselelemente, da so ein gleichmäßiges Abreißen der Fesselelemente auch bei nicht ganz so starken Explosionen begünstigt wird. Hierdurch wird vor der eigentlichen Fesselung des Reißdaches stets eine beträchtliche Menge an kinetischer Energie abgebaut, wodurch die ersten Fesselelemente stark entlastet werden.

Eine vorteilhafte andere Mögichkeit, ein Durchreißen der zweiten Fesselelemente zu erreichen, besteht darin, weniger zweite Fesselelemente vorzusehen als erste Fesselelemente.

Für den Abbau an kinetischer Energie ist es auch günstig, wenn die zweiten Fesselelemente dehnbar ausgebildet sind. Hierdurch kann ein kontrolliertes Abheben erreicht werden, wobei über einen längeren Abhebeweg kontinuierlich kinetische Energie abgebaut wird, bis das Reißdach von den ersten Fesselelementen gehalten wird.

Für ein kontrolliertes Abreißen der zweiten Fesselelemente ist es auch förderlich, wenn diese jeweils eine Sollbruchstelle aufweisen.

Gemäß einer vorteilhaften Ausgestaltung der Erfindung können die zweiten Fesselelemente an denselben Befestigungsstellen am Reißdach und am übrigen Behälter befestigt sein wie die ersten Fesselelemente. Diese Ausgestaltung eignet sich insbesondere zum Nachrüsten bereits in Betrieb befindlicher Behälter. Durch diese einfache Maßnahme kann die Betriebssicherheit der Behälter beträchtlich erhöht werden.

Baulich besonders einfach können die Fesselelemente als Ketten ausgebildet sein.

Für ein gleichmäßiges Abheben und eine gleichmäßige Fesselung des Reißdaches ist es vorteilhaft, wenn die Fesselelemente voneinander beabstandet gleichmäßig über den Rand des Reißdaches verteilt angeordnet sind. Förderlich ist hierfür auch, daß etwa 6 bis 12 erste und zweite Fesselelemente vorgesehen sind.

Im folgenden wird ein Ausführungsbeispiel der Erfindung anhand einer Zeichnung näher erläutert. Es zeigen:

Fig. 1 eine schematische Seitenansicht eines Druckbehälters mit geschlossenem Reißdach,

Fig. 2 den Behälter aus Fig. 1 mit an den zweiten Fesselelementen gehaltenem, abgehobenem Reißdach,

Fig. 3 den Behälter aus Fig. 1 mit weiter abgehobenem, nun an den ersten Fesselelementen gehaltenem Reißdach und

Fig. 4 in einer vergrößerten Ansicht das Detail IV aus Fig. 1.

Die Zeichnung zeigt einen Silobehälter 1 zur Aufnahme von explosionsgefährdetem Gut, insbesondere Staub. Bei dem hier gezeigten Behälter ist die Höhe mehr als fünfmal so groß, wie der Durchmesser des Behälters. Für solche Behälter ist vorgeschrieben, daß über das gesamte Dach eine Druckentlastung stattfinden kann.

Zu diesem Zweck weist der Behälter ein sogenanntes Reißdach 2 auf, das im Explosionsfalle abheben kann. Hierzu ist das Reißdach 2 an einem umlaufenden Flansch 3 mit Reißbolzen 4 an einem umlaufenden Flansch 5 des übrigen Behälters 1 befestigt. In den Zeichnungen sind nicht alle Reißbolzen 4 dargestellt. Es sind über den Umfang des Behälters 1 etwa 20 solcher Reißbolzen 4 angeordnet. Wieviele Reißbolzen vorgesehen sein müssen, hängt im wesentlichen von der Größe des Behälters ab.

Das Reißdach 2 ist über Ketten 6 und 7 mit dem Silobehälter 1 verbunden. Bei dem hier beschriebenen Behälter sind, obwohl nicht dargestellt, insgesamt jeweils zwölf Ketten 6 und zwölf Ketten 7 gleichmäßig voneinander beabstandet über den Umfang des Behälters 1 verteilt angebracht. Die Ketten 6 sind kürzer und schwächer dimensioniert als die Ketten 7. Aufgrund ihrer schwächeren Dimensionierung erlauben sie auch eine höhere Dehnung, bevor sie durchreißen.

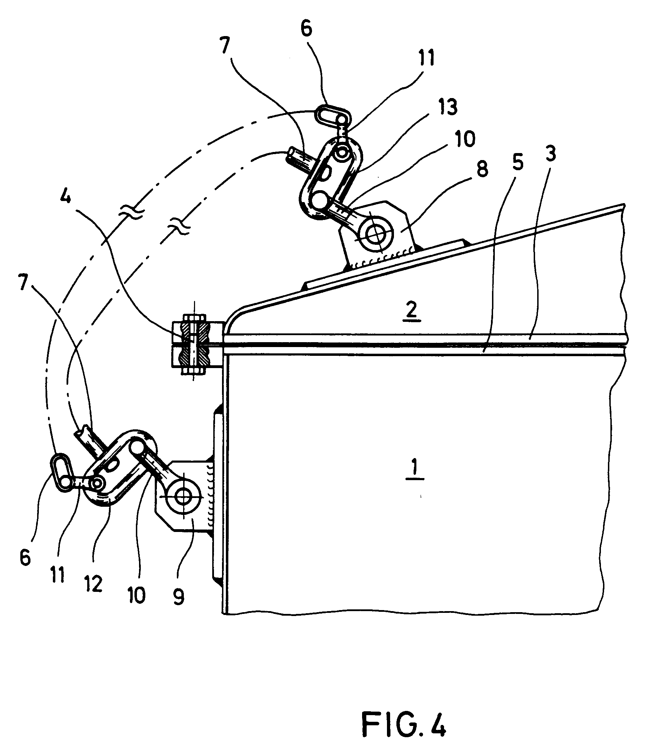

Wie besonders gut aus Fig. 4 ersichtlich ist, sind beide Ketten 6 und 7 jeweils gemeinsam an einer Anschweißöse 8 am Reißdach 2 und an einer weiteren Anschweißöse 9 am Silobehälter befestigt. Genaugenommen ist die stärkere Kette 7 jeweils über Schäkel 10 mit den Ösen 8 und 9 verbunden, während die schwächer dimensionierte Kette 6 ebenfalls über einen Schäkel 11 jeweils mit dem ersten und dem letzten Glied 12 bzw. 13 der stärker dimensionierten Kette 7 verbunden ist. Hiermit sind eine Reihe von Montagevorteilen verbunden, da die Kombination aus den Ketten 6 und 7 wie eine einzige Kette an dem Silobehälter 1 und an dem Reißdach 2 angebracht werden kann. Außerdem ist es möglich, die Kombination aus den Ketten 6 und 7 auch an herkömmlichen Silobehältern anzubringen, die bislang nur mit jeweils einer Kette versehen waren.

Im folgenden wird die Wirkungsweise des beschriebenen Silobehälters näher erläutert.

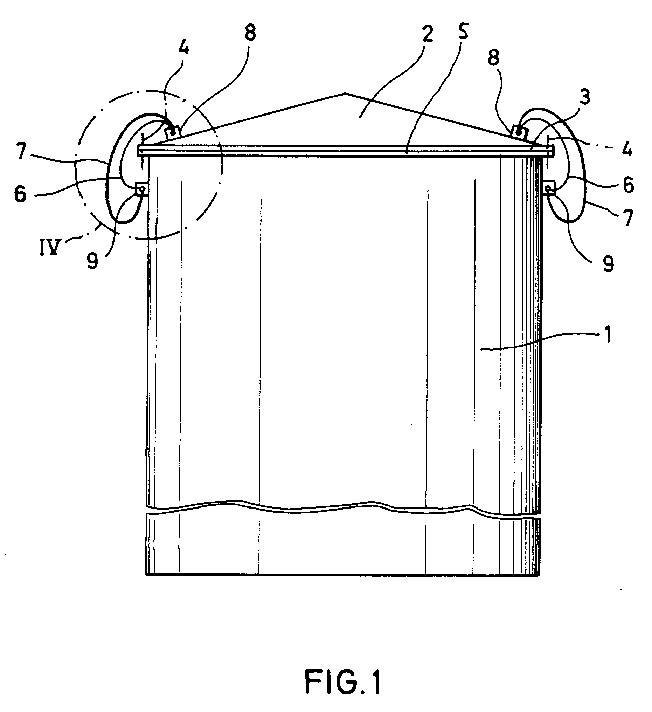

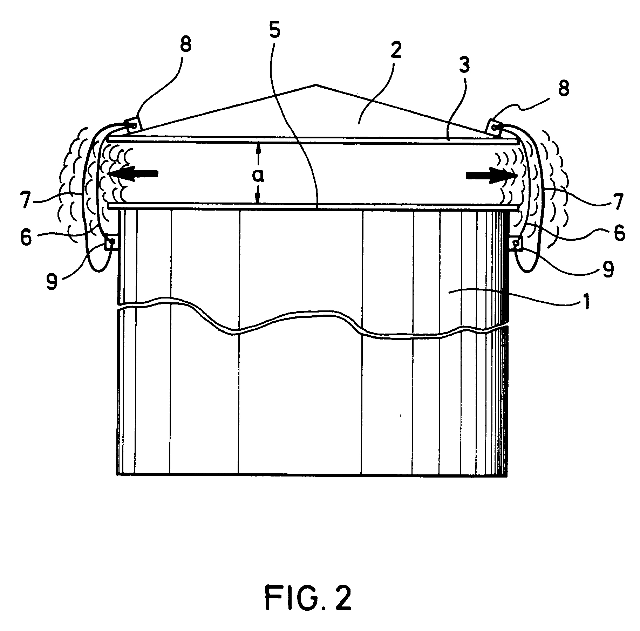

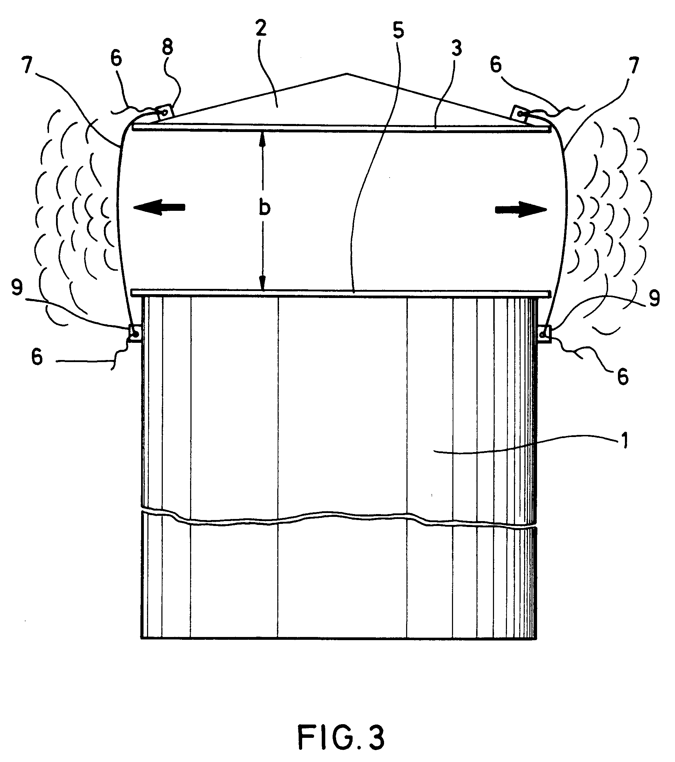

Ausgehend von dem in Fig. 1 gezeigten Zustand wird nun angenommen, daß sich im Inneren des Silobehälters 1 eine Explosion ereignet. Die hierdurch auf das Behälterdach wirkenden Druckkräfte haben zur Folge, daß die das Reißdach 2 haltenden Reißbolzen 4 abreißen. Das Reißdach 2 hebt nun um den Betrag a in die in Fig. 2 gezeigte Stellung ab. In dieser Stellung sind die schwächer dimensionierten Ketten 6 straff gespannt, während die stärker dimensionierten und länger ausgebildeten Ketten 7 noch schlaff herunterhängen. In dieser Stellung kann bereits ein Teil der Explosion zwischen dem Reisdach 2 und dem Silobehälter 1 verpuffen. Bei einer besonders heftigen Explosion wird jedoch die kinetische Energie des nach oben geschleuderten Reißdaches 2 so groß sein, daß die Ketten 6 nicht in der Lage sind, das Reißdach 2 zu halten. Die Ketten 6 werden daher überdehnt und reißen schließlich, wobei ein verhältnismäßig großer Betrag der kinetischen Energie vernichtet wird. Nach dem Abriß der Ketten 6 gelangt das Reißdach 2 in die in der Fig. 3 dargestellten Position, in der nunmehr auch die stärker dimensionierten Ketten 7 straff gespannt sind und das Reißdach um den Betrag b abgehoben hat.

Die Ketten 7 sind nun so dimensioniert, daß sie das Reißdach in dieser Position endgültig halten. Bei normalen Silobehältern und normalen Gütern ist dies auch ausreichend, da bereits durch das Überdehnen und Abreißen der schwächer dimensionierten Ketten 6 ein ausreichendes Maß an kinetischer Energie vernichtet wurde.

Bei besonders hohen Silobehältern mit sehr kleinem Durchmesser ist es jedoch denkbar, daß man zusätzlich zu den schwächer dimensionierten Ketten 6 noch weitere Ketten vorsieht, die zwar länger sind als die Ketten 6, aber immer noch kürzer sind als die Ketten 7, um somit einen noch stärkeren Abbau der kinetischen Energie zu erreichen.

Sobald die Explosion verpufft ist, fällt das Reißdach, geführt an den Ketten 7 wieder nach unten auf den Silobehälter 1. Die Ketten hindern das Reißdach 2 auch nach der Explosion daran, daß es neben den Silobehälter fällt und dort zusätzlichen Schaden anrichtet.


## Patentansprüche

1. Behälter für explosionsgefährdetes Gut, mit einem bei Explosion im Inneren des Behälters abhebenden Reißdach, das über erste, ein Abheben des Reißdaches erlaubende Fesselelemente vorbestimmter Länge mit dem übrigen Behälter verbunden ist, **dadurch gekennzeichnet,** daß zusätzlich zumindest zweite Fesselelemente (6) vorgesehen sind, deren Länge geringer ist als die der ersten Fesselelemente (7).

2. Behälter nach Anspruch 1, dadurch gekennzeichnet, daß die zweiten Fesselelemente (6) schwächer dimensioniert sind als die ersten Fesselelemente (7).

3. Behälter nach Anspruch 1 oder 2, dadurch gekennzeichnet, daß weniger zweite Fesselelemente (6) vorgesehen sind als erste Fesselelemente (7).

4. Behälter nach einem der Ansprüche 1 bis 3, dadurch gekennzeichnet, daß die zweiten Fesselelemente (6) dehnbar ausgebildet sind.

5. Behälter nach einem der Ansprüche 1 bis 4, dadurch gekennzeichnet, daß die zweiten Fesselelemente (6) jeweils eine Sollbruchstelle aufweisen.

6. Behälter nach einem der Ansprüche 1 bis 5, dadurch gekennzeichnet, daß die zweiten Fesselelemente (6) an denselben Befestigungsstellen (8, 9) am Reißdach (2) und am übrigen Behälter (1) befestigt sind wie die ersten Fesselelemente (7).

7. Behälter nach einem der ansprüche 1 bis 6, dadurch gekennzeichnet, daß die Fesselelemente als Ketten (6, 7) ausgebildet sind.

8. Behälter nach einem der ansprüche 1 bis 7, dadurch gekennzeichnet, daß die Fesselelemente (6; 7) voneinander beabstandet gleichmäßig über den Rand des Reißdaches (2) verteilt angeordnet sind.

9. Behälter nach einem der ansprüche 1 bis 8, dadurch gekennzeichnet, daß etwa 6 bis 12 erste und zweite Fesselelemente (6, 7) vorgesehen sind.

## Claims

1. A container for a material at risk of exploding, having a rip-off roof which lifts off in the event of an explosion in the interior of the container and is connected to the remainder of the container by means of first fettering elements which permit the rip-off roof to lift off and are of a predetermined length, characterized in that furthermore at least second fettering elements (6) are provided which are shorter than the first fettering elements (7).

2. A container in accordance with Claim 1, characterized in that the second fettering elements are thinner dimensioned than the first fettering elements (7).

3. A container in accordance with Claim 1 or 2, characterized in that fewer second fettering elements (6) than first fettering elements (7) are provided.

4. A container in accordance with any one of Claims 1 to 3, characterized in that the second fettering elements (6) are stretchable.

5. A container in accordance with any one of Claims 1 to 4, characterized in that the second fettering elements (6) each have a predetermined breaking point.

6. A container in accordance with any one of Claims 1 to 5, characterized in that the second fettering elements (6) are secured at the same securing sites (8, 9) to the rip-off roof (2) and to the remainder of the container (1) as the first fettering elements (7).

7. A container in accordance with any one of Claims 1 to 6, characterized in that the fettering elements are constructed as chains (6, 7).

8. A container in accordance with'any of Claims 1 to 7, characterized in that the fettering elements (6; 7) are arranged at a distance from one another and distributed uniformly over the edge of the rip-off roof (2).

9. A container in accordance with any one of Claims 1 to 8, characterized in that approximately 6 to 12 first and second fettering elements (6, 7) are provided.

## Revendications

1. Réservoir pour matériaux explosifs, avec un toit déchirable, qui se soulève en cas d'explosion à l'intérieur du réservoir et est relie au reste du réservoir par l'intermédiaire de premiers éléments de contention, de longueur prédéterminée, permettant le soulèvement du toit déchirable, caractérisé en ce que sont prévus au soins des deuxièmes éléments de contention (6), dont la longueur est inférieure à celle des premiers éléments de contention (7).

2. Réservoir selon la revendication 1, caractérisé en ce que les deuxièmes éléments de contention (6) sont dimensionnés de façon à être plus faible que les premiers éléments de contention (7).

3. Réservoir selon la revendication 1 ou 2, caractérisé en ce que sont prévus au moins des deuxièmes éléments de contention (6), à titre de premiers éléments de contention (7).

4. Réservoir selon l'une des revendications 1 à 3, caractérisé en ce que les deuxièmes éléments de contention (6) sont extensibles.

5. Réservoir selon l'une des revendications 1 à 4, caractérisé en ce que les deuxièmes éléments de contention (6) présentent chacun un point destiné à la rupture.

6. Réservoir selon l'une des revendications 1 à 5, caractérisé en ce que les deuxièmes éléments de contention (6) sont fixés sur les mêmes points de fixation (8,9) que les premiers éléments de contentions (7), que ce soit sur le toit déchirable (2) et sur le reste du réservoir (1).

7. Réservoir selon l'une des revendications 1 à 6, caractérisé en ce que les éléments de contention sont réalisés sous forme de chaînes (6,7).

8. Réservoir selon l'une des revendications 1 à 7, caractérisé en ce que les éléments de contention sont espacés régulièrement les unes des autres sur le bord du toit déchirable (2).

9. Réservoir selon l'une des revendications 1 à 8, caractérisé en ce que sont prévus à peu près 6 à 12 premiers et deuxièmes éléments de contention (6,7).

FIG.1

FIG. 2

FIG.3

7

FIG. 4